# EUROPEAN PATENT APPLICATION

(11) **EP 4 787 685 A1**
(43) Date of publication of application: **05.08.2026**
(21) Application number: 24872137.5
(22) Date of filing: 24.09.2024
(51) Int. Cl.: H02K 15/085

(54) **JIG AND DEVICE FOR STATOR TWISTING**

(30) Priority: 25.09.2023 JP 2023161775
(71) Applicant: NHK Spring Co., Ltd., Yokohama-shi, Kanagawa 236-0004 (JP)
(72) Inventor: OTSUKA, Motoyuki, Yokohama-shi, Kanagawa 236-0004 (JP); KOBAYASHI, Dai, Yokohama-shi, Kanagawa 236-0004 (JP); CHIBA, Yuto, Yokohama-shi, Kanagawa 236-0004 (JP)
(74) Representative: Oppermann, Frank
(86) International application number: PCT/JP2024/033829
(87) International publication number: WO 2025/070346

(57) **Abstract**

Provided is a twisting jig for a stator, capable of suppress radial deformation of projected portions of segment coils projected from a stator core at the time of a twisting process. The twisting jig 9A for a stator 1 in which projected portions 7A are bent in a circumferential direction by a twisting process, the projected portions including coil ends 7a of segment coils 7 held by a stator core, is provided with a twisting member 13 having a holding portion 17 that holds the coil ends 7a to displace the coil ends relative to the stator core 3 in an axial direction and the circumferential direction and bend the projected portions 7A, and a restraining wall 31 supported so as to be movable in the axial direction on an outside in a radial direction with respect to the twisting member 13, to restrain the projected portions 7A on the outside in the radial direction at the time of the bending in a projecting state of the restraining wall projecting with respect to the holding portion 17 in the axial direction.

## Description

### FIELD OF THE INVENTION

The present invention relates to a twisting jig and a twisting device for a stator of a rotating electric machine such as a motor or a generator.

### BACKGROUND OF THE INVENTION

As a conventional twisting device for a stator, for example, there is a manufacturing device for a stator disclosed in Patent literature 1.

The manufacturing device is provided with an inner-conductor-bending die and an outer-conductor-bending die. The inner-conductor-bending die and the outer-conductor-bending die correspond to inner-conductor-projected portions and outer-conductor-projected portions which are portions of segment coils projecting from a stator core, respectively. A partition wall is provided between the inner-conductor-projected portions and the outer-conductor-projected portions.

When this manufacturing device is used, an inner restraining wall and an outer restraining wall are disposed radially inside and outside the inner- and the outer-conductor-projected portions, respectively. Then, the inner-conductor-bending die and the outer-conductor-bending die are lowered while the partition wall is inserted between the inner- and the outer-conductor-projected portions in the radial direction. The inner-conductor-bending die and the outer-conductor-bending die are moved rotatably reversely to each other, to bend the inner- and the outer-conductor-projected portions in a circumferential direction.

At this time, the inner restraining wall, the outer restraining wall, and the partition wall prevent the inner-conductor-projected portions and the outer-conductor-projected portions from falling in the radial direction. This suppresses damage to insulating layers of the inner-conductor-projected portions and the outer-conductor-projected portions.

The manufacturing device, however, specially disposes the inner restraining wall and the outer restraining wall on the inside and the outside of the inner-conductor-projected portions and the outer-conductor-projected portions when the inner- and the outer-conductor-projected portions are lowered, and therefore, there is a problem that operations require time consuming.

### CITATION LIST

### PATENT LITERATURE

| | |
|---|---|
| PATENT LITERATURE 1: | JP 2018-170910 A |

### SUMMARY OF THE INVENTION

### PROBLEMS TO BE SOLVED BY THE INVENTION

The problem to be solved is that it is time-consuming to suppress radial deformation of projected portions of segment coils projected from a stator core during a twisting process.

### MEANS FOR SOLVING THE PROBLEM

The present invention provides a twisting jig for a stator in which projected portions with respect to a stator core are bent in a circumferential direction by a twisting process, the projected portions including coil ends of segment coils held by the stator core. This twisting jig is provided with a twisting member having a holding portion that holds the coil ends to displace the coil ends relative to the stator core in an axial direction and a circumferential direction and bend the projected portions, and a restraining wall supported so as to be movable in the axial direction on an outside or an inside in a radial direction with respect to the twisting member, to restrain the projected portions on the outside or the inside in the radial direction at the time of the bending in a projecting state of the restraining wall projecting with respect to the holding portion in the axial direction.

The present invention also provides a twisting device being provided with the aforementioned twisting jig.

### EFFECT OF THE INVENTION

According to the present invention, it easily suppresses radial deformation of projected portions of segment coils projected from a stator core during a twisting process.

### BRIEF DESCRIPTION OF THE DRAWINGS

[FIG. 1] FIG. 1 is a perspective view illustrating a stator after bending projected portions according to an embodiment of the present invention.
[FIG. 2] FIG. 2 is a perspective view illustrating a stator before bending the projected portions.
[FIG. 3] FIG. 3 is a schematic perspective view illustrating a first twisting jig in a retracted state of a first restraining wall according to the embodiment of the present invention.
[FIG. 4] FIG. 4 is a schematic perspective view illustrating a projecting state of the first restraining wall of the first twisting jig of FIG. 3.
[FIG. 5] FIG. 5 (A) and FIG. 5 (B) are sectional views illustrating a state in which the first twisting jig of FIG. 3 is disposed with respect to the stator, and FIG. 5 (A) is a state before a twist process, and FIG. 5 (B) is a state after the twist process.
[FIG. 6] FIG. 6 is an enlarged sectional view illustrating part of FIG. 5(A).
[FIG. 7] FIG. 7 is an enlarged sectional view illustrating part of FIG. 5(B).
[FIG. 8] FIG. 8 is a schematic perspective view illustrating a second twisting jig in a retracted state of a second restraining wall according to the embodiment of the present invention.
[FIG. 9] FIG. 9 is a schematic perspective view illustrating the second twisting jig in a projecting state of the second restraining wall of FIG. 8.
[FIG. 10] FIG. 10 (A) and FIG. 10 (B) are sectional views illustrating a state in which the second twisting jig is disposed with respect to the stator, and FIG. 10 (A) is a state before the twisting process, and FIG. 10 (B) is a state after the twisting process.
[FIG. 11] FIG. 11 is an enlarged sectional view illustrating part of FIG. 10(A).
[FIG. 12] FIG. 12 is an enlarged sectional view illustrating part of FIG. 10(B).

### EMBODIMENT FOR CARRYING OUT THE INVENTION

The object of easily suppressing radial deformation of projected portions of segment coils projected from a stator core during a twisting process is accomplished by supporting a restraining wall so as to be movable in an axial direction with respect to a holding portion that holds projected portions during a twisting process.

Namely, a twisting jig 9 (9A and 9B) is a twisting jig for a stator 1 in which projected portions 7A relative to a stator core 3 are bent in a circumferential direction by the twisting process, the projected portions including coil ends 7a of segment coils 7 held by the stator core 3.

The twisting jig 9 is provided with twisting members 13, 15, 41, and 43 and restraining walls 31 and 59. The twisting members 13, 15, 41, and 43 include holding portions 17, 19, 45, and 47 that hold the coil ends 7a to displace the coil ends relative to the stator core 3 in an axial direction and a circumferential direction and bend the projected portions 7A. The restraining walls 31 and 59 are supported so as to be movable in the axial direction on an outside or an inside in the radial direction with respect to the twisted members 13, 15, 41, and 43, to restrain the projected portions 7A on the outside or the inside in the radial direction at the time of the bending in a projecting state projecting of the restraining wall projecting with respect to the holding portions 17, 19, 45, and 47 in the axial direction.

The twisting members 13, 15, 41, and 43 may have circumferential shapes, and the restraining walls 31 and 59 may have circumferential shapes located on the outside or the inside with respect to the twisting members 13, 15, 41, and 43 in the radial direction.

The restraining walls 31 and 59 may abut against the stator core 3 in the axial direction in the twisting process, and the holding portions 17, 19, 45, and 47 may move in the axial direction with respect to the restraining walls 31 and 59 abutting against the stator core 3 in the twisting process.

The twisting jig 9 may be provided with biasing members 37 and 65 to bias the restraining walls 31 and 59 in the axial direction to keep the restraining walls in the projecting state with respect to the holding portions 17, 19, 45, and 47.

The twisting members 13, 15, 41, and 43 may be provided with outer members 13 and 41 and inner members 15 and 43 that are positioned outside and inside in the radial direction and rotate in opposite directions to each other to bend the projected portions 7A on an outer side and an inner side in the radial direction oppositely in the circumferential direction. In this case, the restraining walls 31 and 59 may be disposed outside the outer members 13 and 41 in the radial direction or inside the inner members 15 and 43 in the radial direction.

The twisting device is provided with the twisting jig 9 to twist the projected portions 7A of the segment coils 7.

### EMBODIMENT

### [Stator]

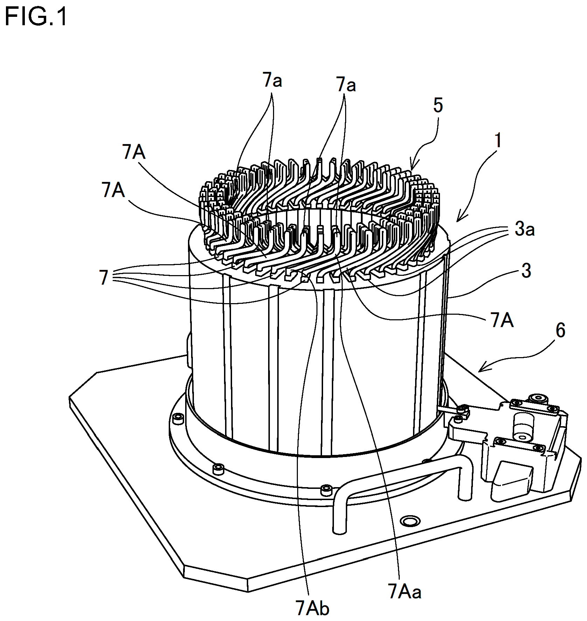

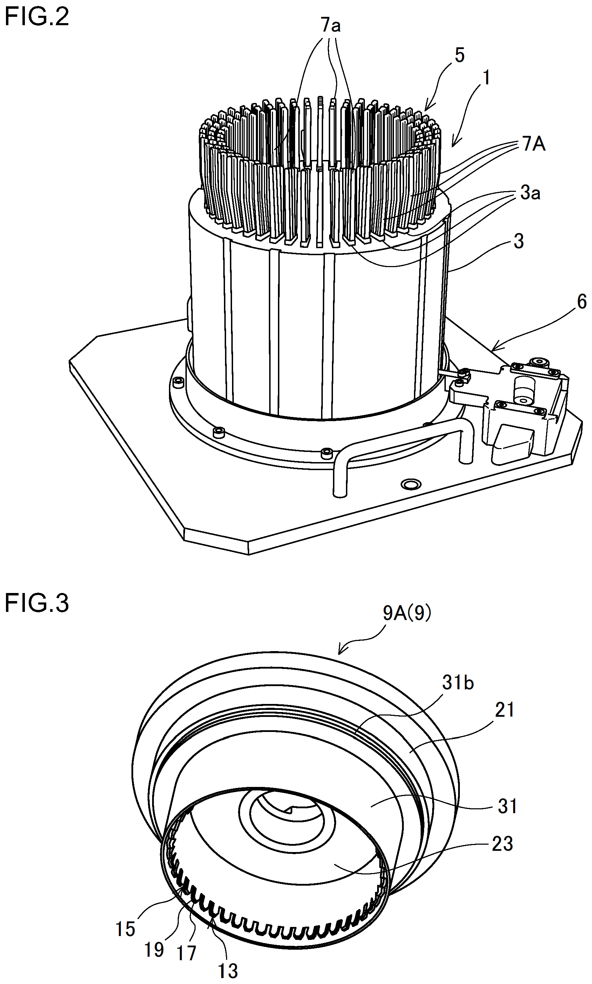

FIG. 1 is a perspective view of a stator illustrating a state after bending projected portions according to the embodiment of the present invention. FIG. 2 is a perspective view of the stator before bending the projected portions.

A stator 1 of FIG. 1 forms a rotating electric machine together with a rotor (not illustrated). The rotating electric machine is configured as, for example, a 3-phase (U-phase, V-phase, and W-phase) AC permanent magnet synchronous motor with 8 poles or the like.

Here, FIGS. 1 and 2 illustrate a state in which a stator coil 5 is incorporated in a stator core 3 to be supported by a support jig 6. In the state of FIG. 1, projected portions 7A including coil ends 7a of each segment coil 7 are projected from the stator core 3 in an axial direction, are disposed in a circumferential direction, and are bent in the circumferential direction. In the state of FIG. 2, the projected portions 7A are extended along the axial direction without being bent in the circumferential direction.

The axial direction and the circumferential direction mean a direction along an axis of the stator 1 and a direction along an outer periphery of the stator, respectively. Further, a radial direction means a direction along a diameter of the stator 1. Top and bottom mean top and bottom in a gravity direction.

Each set of the coil ends 7a adjacent to each other in the radial direction are welded and joined to each other in the coil ends 7. With this, a plurality of segment coils 7 form the stator coil 5 as a whole. Then, insulating coating is conducted to the coil ends 7a and resin encapsulation is conducted to a portion of the stator coil 5 and the like to form the stator 1 for a rotating electric machine. In the following explanation, one illustrated in FIGS. 1 and 2 will be referred to as the stator 1 to be explained for convenience.

The stator core 3 of the stator 1 is formed by, for example, laminating a plurality of annular electromagnetic steel sheets, silicon steel sheets, or the like. The stator coil 5 is provided for three phases in the stator core 3 and is configured into a wave-winding shape.

The stator core 3 is provided with a plurality of slots 3a at equal intervals in the circumferential direction. The segment coils 7 are inserted into the slots 3. With this, the segment coils 7 are held by the stator core 3a.

Each segment coil 7 is formed in a U shape, for example, in a hairpin shape. The plurality of the segment coils 7 are combined in the circumferential direction with respect to the stator core 3. The segment coils 7 are disposed along the circumferential direction, and are shifted to adjacent layers at vertex portions in the hairpin shape. In addition, the vertex portions are located on a lower face side of FIGS. 1 and 2, and are omitted to be illustrated in FIGS. 1 and 2.

As illustrated in FIGS. 1 and 2, the segment coil 7 is formed of, for example, a rectangular flat wire having a predetermined aspect ratio in a cross section. The cross-sectional shape of the segment coil 7 is, however, not particularly limited. In the segment coil 7, the projected portions 7A including the coil ends 7a having no insulating layer are projected from the stator core 3. The insulating layer is formed in the entire segment coil 7A other than the coil ends 7a.

The projected portion 7A is twisted and bent as illustrated in FIG. 1. The projected portion 7A includes a portion inclined with respect to the axial direction and the circumferential direction. Before the bending of FIG. 2, the projected portion 7A, therefore, is a tip region in a hairpin-shaped leg portion of the segment coil 7 to be bent.

The projected portions 7A disposed in the circumferential direction are disposed in six layers in the radial direction in this drawing. The projected portions 7A are twisted reversely in the circumferential direction by two inner and outer layers as one set from the first layer on an outermost periphery to the sixth layer on an innermost periphery. In each set of the two inner and outer layers, the coil ends 7a of the projected portions 7A are joined by welding. The number of the layers of the projected portions 7A is appropriately set according to characteristics of the stator 1 and the like.

### [Twisting device for stator]

In the present embodiment, the projected portions 7A, which are projected in the axial direction from the stator core 3 as illustrated in FIG. 2 before a twisting process, are bent in the circumferential direction as illustrated in FIG. 1 by a twisting device for the stator 1.

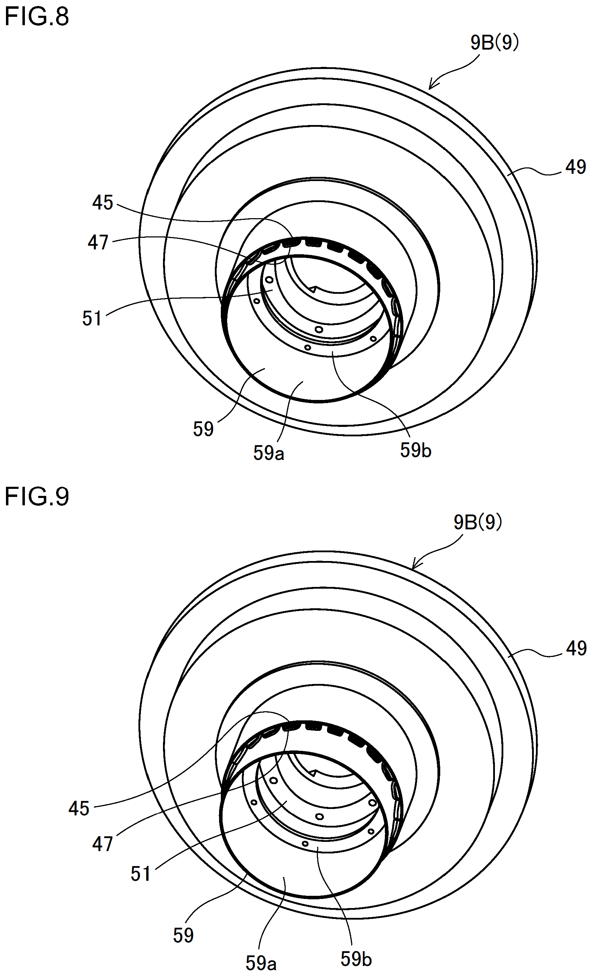

The twisting device of the present embodiment is provided with a plurality of twisting jigs 9 although the twisting device is not illustrated as a whole. It should be noted that the twisting jig 9 is provided for each of a set of two inner and outer layers of the projected portions 7A in the radial direction. In the present embodiment, only a first twisting jig 9A (FIG. 3 to FIG. 7) for the outermost set of the projected portions 7A and a second twisting jig 9B (FIGS. 8 to 12) for the innermost set of the projected portions 7A will be explained.

Further, the twisting device includes a lifting mechanism, a rotation mechanism, a jig replacement mechanism, a control device, and the like being not illustrated. The lifting mechanism is configured to vertically displace the twisting jig 9 with respect to the stator 1. The rotation mechanism is configured to rotate the twisting jig 9 (twisting rings explained later). The jig replacement mechanism is configured such that a plurality of the twisting jigs 9 for different layers are replaced to be positioned on the stator 1. The control device is configured by a computer that controls each part of the twisting device to perform the twist processing. This twisting device performs the bending with respect to different sets of the projected portions 7A while exchanging the plurality of the twisting jigs 9.

### [First twisting jig]

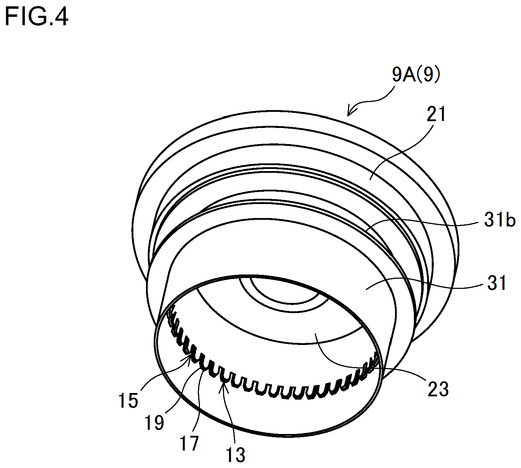

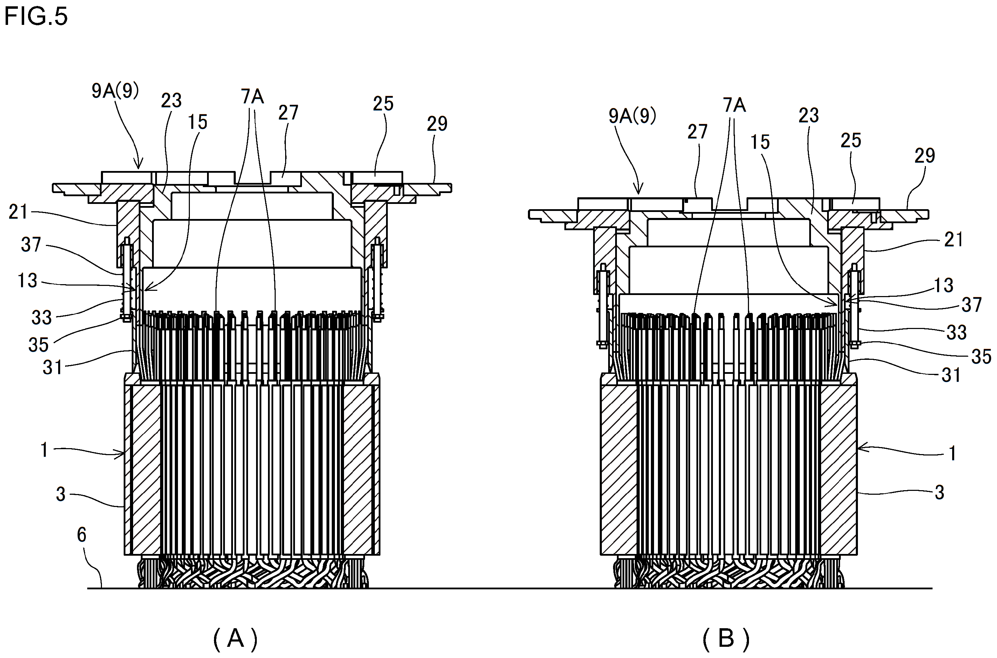

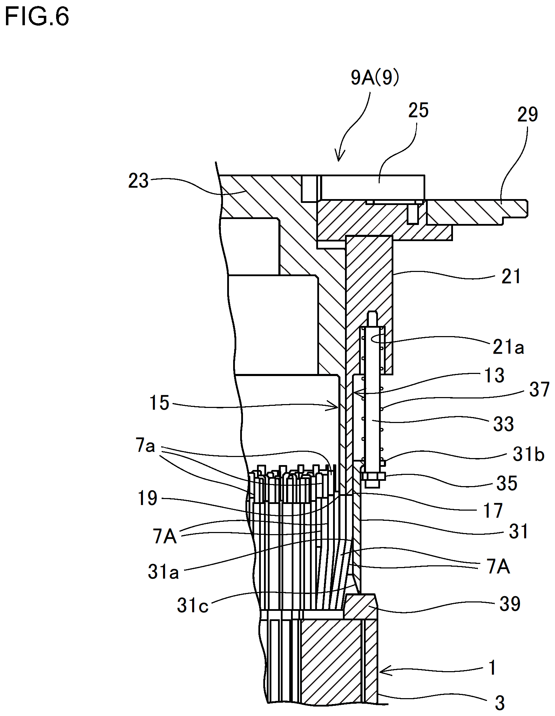

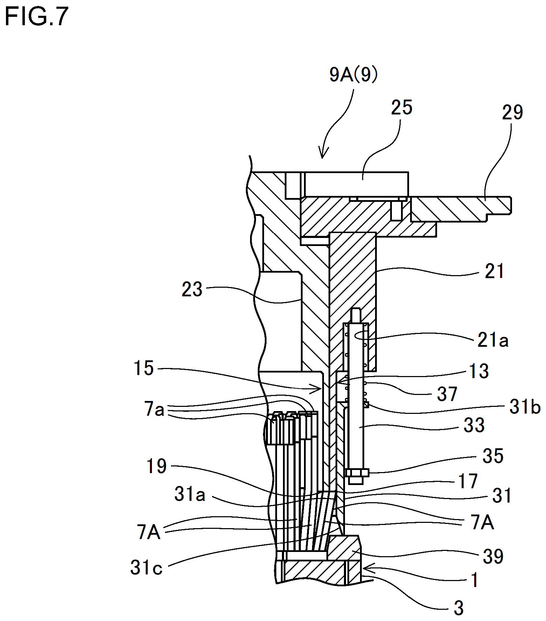

FIG. 3 is a schematic perspective view illustrating the first twisting jig in a retracted state of a first restraining wall according to the present embodiment. FIG. 4 is a schematic perspective view illustrating a projecting state of the first restraining wall of the first twisting jig of FIG. 3. FIGS. 5 (A) and 5 (B) are sectional views of a state in which the first twisting jig of FIG. 3 is disposed with respect to the stator, and FIG. 5 (A) is a state before the twist processing and FIG. 5 (B) is a state after the twist processing. FIG. 6 is an enlarged sectional view illustrating part of FIG. 5(A). FIG. 7 is an enlarged sectional view illustrating part of FIG. 5(B).

As illustrated in FIGS. 3 to 7, the first twisting jig 9A is provided with a first twisting ring 13 that is an outer member of twisting members, a second twisting ring 15 that is an inner member of the same, and a first restraining wall 31.

The first twisting ring 13 is to twist a group of the projected portions 7A disposed in the first layer on the outermost periphery of the stator 1 toward one side in the circumferential direction. The second twisting ring 15 is to twist a group of the projected portions 7A of the second layer on an inner side of the outermost periphery reversely in the circumferential direction with respect to the group of the projected portions 7A of the first layer.

The first twisting ring 13 and the second twisting ring 15 are formed in cylindrical shapes having different outer diameters and are concentrically combined. The twisting members, however, do not need to be cylindrical unlike the first twisting ring 13 and the second twisting ring 15, and may be in an arc shape or the like in a plan view. In addition, the twisting member may have a plurality of arc-shaped members disposed in the circumferential direction to have a non-continuous circumferential shape. Each of the first twisting ring 13 and the second twisting ring 15 may be used alone.

The first and the second twisting rings 13 and 15 are rotatable to each other in the circumferential direction. The first and the second twisting rings 13 and 15 have an outer holding portion 17 and an inner holding portion 19 as holding portions to hold the projected portions 7A, respectively. The outer holding portion 17 and the inner holding portion 19 are formed in a comb shape at lower ends of the first and the second twisting rings 13 and 15, respectively. It should be noted that, although the outer holding portion 17 and the inner holding portion 19 do not need to be comb-shaped as long as the projected portions 7A are held, the holding portions preferably have forms in which the projected portions 7A are inserted in the axial direction.

An outer drive cylinder 21 is integrally provided at an upper end of the first twisting ring 13. An inner drive cylinder 23 is integrally provided at an upper end of the second twisting ring 15. Engagement portions 25 and 27 for rotation drive are formed in the outer drive cylinder 21 and the inner drive cylinder 23. The outer drive cylinder 21 is provided with a flange 29 to be attached to the jig replacement mechanism.

The first restraining wall 31 is supported by the first twisting ring 13 so as to be movable in the axial direction on the outside of the first twisting ring in the radial direction. The axial movement of the first restraining wall 31 is performed between a retracted state and a projecting state. The retracted state of the first restraining wall 31 is a state in which the first restraining wall 31 is retracted so as to be pushed into the first twisting ring 13 in the axial direction. The projecting state of the first restraining wall 31 is a state in which the first restraining wall 31 is projected with respect to the first twisting ring 13. It should be noted that another restraining wall may be added inside the second twisting ring 15.

The first restraining wall 31 of the present embodiment has a circumferential shape, particularly a cylindrical shape, and is concentrically fitted to the first twisting ring 13. It should be noted that the restraining wall does not need to be cylindrical unlike the first restraining wall 31, and may be an arc shape or the like in a plan view. In addition, the restraining wall may be formed in a non-continuous circumferential shape by arranging a plurality of arc-shaped ones in the circumferential direction.

The first restraining wall 31 restrains the projected portions 7A on an outside in the radial direction at the time of the bending in the projecting state in which the first restricting wall is projected in the axial direction with respect to the outer holding portion 17 of the first twisting ring 13 according to movement in the axial direction. The restraining is performed in a range to, when the projected portions 7A are bent, prevent the projected portions 7A from being fallen in the radial direction and from being deformed to escape and swell outward in the radial direction.

This restraining is performed up to at least upper bent portions 7Aa (see FIG. 1) of deformation of the projected portions 7A. Preferably, the restraining is performed between the upper and lower bent portions 7Aa and 7Ab. It should be noted that, in the sense of suppressing deformation such that the projected portions 7A escape and swell outward in the radial direction, the restraining is preferably performed to reduce gaps into which the projected portions 7A are escapable as much as possible.

An inclined face 31c for guiding is formed on an inner periphery of a lower end of the first restraining wall 31. The lower end of the first restraining wall 31 abuts against a first stopper 39 to be described later, and in this state, the first restraining wall 31 restrains the projected portions 7A.

A radial flange 31b is formed at an upper end of the first restraining wall 31. The flange 31b is projected radially outward from the first restraining wall 31 and faces a lower surface of the outer drive cylinder 21. A first guide pin 33 is provided between the flange 31b and the outer drive cylinder 21.

The first guide pin 33 supports the first restraining wall 31 with respect to the first twisting ring 13 and guides the axial movement of the first restraining wall 31. An upper end portion of the first guide pin 33 is fixed in a pin attachment hole 21a of the outer drive cylinder 21 in an inserted state.

The first guide pin 33 passes through the flange 31b of the first restraining wall 31. A first coupling ring 35 having a circumferential shape is coupled to a lower end portion of the first guide pin 33. The first coupling ring 35 is disposed and loosely fitted around an outer periphery of the first restraining wall 31. In addition, a retainer such as a nut may be attached to the lower end portion of the first guide pin 33 instead of the first coupling ring 35.

The first guide pin 33 passes through a first coil spring 37 as a biasing member. In addition, the biasing member is not limited to the coil spring and may be another elastic body such as rubber. The first coil spring 37 is provided between the first twisting ring 13 (outer drive cylinder 21) and the first restraining wall 31 (flange 31b), to bias the first restraining wall 31 in the axial direction. This biasing maintains the projecting state of the restraining wall 31 with respect to the outer holding portion 17.

Sets of the first guide pin 33 and the first coil spring 37 are disposed at a plurality of locations at equal intervals in the circumferential direction with respect to the first restraining wall 31 and are mounted with the same structure.

The first stopper 39 receives the lower end of the first restraining wall 31 in the axial direction and allows relative rotation in the circumferential direction. The first stopper 39 is disposed on the stator core 3 as a processing jig separated from the first twisting jig 9A. The first stopper 39 may be configured by a roller bearing or the like. The first stopper 39 may be omitted. In this case, a roller may be attached to the lower end of the first restraining wall 31.

The first restraining wall 31 moves together when the outer holding portion 17 of the first twisting ring 13 displaces in the circumferential direction while holding the coil ends 7a of the projected portions 7A. The lower end of the first restraining wall 31 is smoothly guided by the first stopper 39 relative to the stator core 3 side in the circumferential direction. In addition, the first stopper 39 may be substituted by a jig used for radially bending conducted before twisting the projected portions 7A.

### [Second twisting jig]

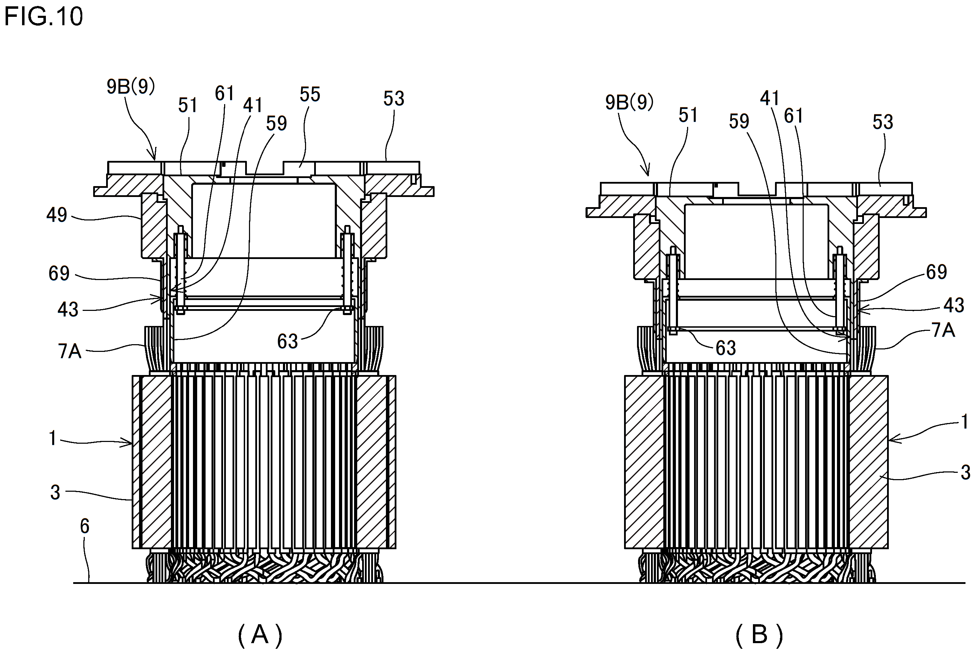

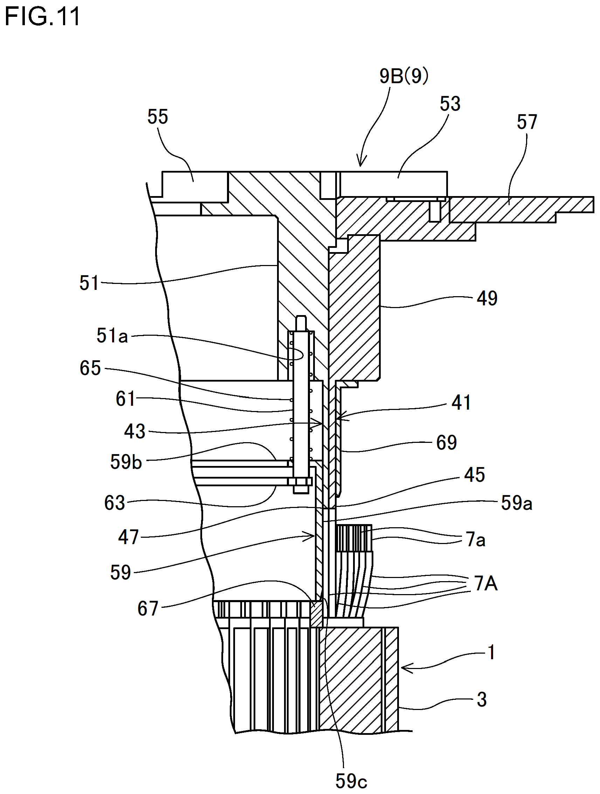

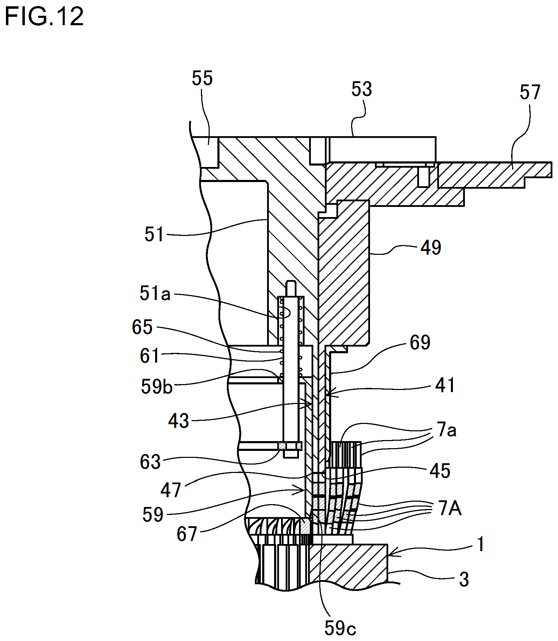

FIG. 8 is a schematic perspective view illustrating the second twisting jig used in the twisting device of the stator according to the embodiment of the present invention in a retracted state of a second restraining wall. FIG. 9 is a schematic perspective view illustrating the second twisting jig of FIG. 8 in a projecting state of the second restraining wall. FIGS. 10 (A) and 10 (B) are sectional views of a state that the second twisting jig is disposed with respect to the stator, and FIG. 10 (A) is a state before the twisting process, and FIG. 10 (B) is a state after the twisting process. FIG. 11 is an enlarged sectional view illustrating part of FIG. 10(A). FIG. 12 is an enlarged sectional view illustrating part of FIG. 10(B).

As illustrated in FIGS. 8 to 12, the second twisting jig 9B has a structure being substantially the same as of the first twisting jig 9A, and is provided with a third twisting ring 41 and a fourth twisting ring 43 having cylindrical shapes as twisting members having circumferential shapes.

The third twisting ring 41 and the fourth twisting ring 43 twist groups of the projected portions 7A disposed in the fifth and the sixth layers of the stator 1 in the circumferential direction, respectively. The third and the fourth twisting rings 41 and 43 correspond to the first and the second twisting rings 13 and 15, respective lower ends of which have an outer holding portion 45 and an inner holding portion 47 in comb shapes separately as holding portions.

An outer drive cylinder 49 and an inner drive cylinder 51 are integrally provided at upper ends of the third twisting ring 41 and the fourth twisting ring 43, respectively, and engagement portions 53 and 55 for rotation drive are formed on the outer drive cylinder 49 and the inner drive cylinder 51. The outer drive cylinder 49 is provided with a flange 57 for attachment to the jig replacement mechanism.

On an inside in the radial direction with respect to the fourth twisting ring 43, the second restraining wall 59 having a circumferential shape is supported so as to be movable in the axial direction. The structure of the second restraining wall 59 corresponds to that of the first restraining wall 31. The first restraining wall 31 on the outside in the radial direction is different in radial orientation from the second restraining wall 59 on the inside in the same.

The second restraining wall 59 restrains the projected portions 7A on an inner side in the radial direction at the time of bending in the projecting state in which the second restricting wall is projected in the axial direction with respect to the inner holding portion 47 of the fourth twisting ring 13 by movement in the axial direction. The restraining is performed in a range to, when the projected portions 7A are bent, prevent the projected portions 7A from being fallen in the radial direction and being deformed to escape and swell inward in the radial direction.

Similarly to the case of the first restraining wall 31, a restraining range of the second restraining wall 59 is the upper bent portions 7Aa of the deformation of the projected portions 7A, preferably between the upper and the lower bent portions 7Aa and 7Ab, more preferably down to the lower bent portions 7Ab, and still more preferably the entire area of the projected portions 7A in the axial direction.

In the present embodiment, an inclined face 59c for guiding is formed on an outer periphery of a lower end of the second restraining wall 59. It is configured that the lower end of the second restraining wall 59 abuts against a second stopper 67 to be explained later, and the second restraining wall 59 restrains the entire area of the projected portions 7A in the axial direction.

A radially inward flange 59b is formed at an upper end of the second restraining wall 59, and the flange 59b faces a lower face of the inner drive cylinder 51. A second guide pin 61 and a second coil spring 65 are disposed between the fourth twisting ring 43 (inner drive cylinder 51) and the second restraining wall 59 (flange 59b). The second guide pin 61 is attached to a pin attachment hole 51a of the inner drive cylinder 51 and passes through the flange 59b of the second restraining wall 59. A second coupling ring 63 having a circumferential shape is coupled to a lower end portion of the second guide pin 61.

The second guide pin 61 and the second coil spring 65 are disposed at a plurality of locations at equal intervals in the circumferential direction of the second restraining wall 59, and are attached in a similar structure. It should be noted that a separate restraining wall may be added outside the third twisting ring 41.

### [Twist processing]

In the twisting process of the stator 1, the stator 1 fixedly supported by the support jig 6 is set in the twisting device first, as illustrated in FIG. 2. In the embodiment, the plurality of the twisting jigs 9 are sequentially disposed with respect to the stator 1 by the jig replacement mechanism, to sequentially bend the projected portions 7A of the first to the sixth layers in the circumferential direction.

When the first twisting jig 9A is disposed on the stator 1, the first stopper 39 is disposed on the stator core 3. In this state, the first twisting jig 9A is lowered toward the stator 1 by the lifting mechanism. Alternatively, the stator 1 may be raised. Alternatively, the first twisting jig 9A may be lowered while raising the stator 1.

With this, the coil ends 7a of the projected portions 7A of the outermost first layer are inserted between the comb teeth of the outer holding portion 17 as illustrated in FIG. 5(A) and FIG. 6. At the same time, the coil ends 7a of the projected portions 7A of the second layer are inserted between the comb teeth of the inner holding portion 19. With this insertion, the first twisting jig 9A is mounted on the stator 1.

At this time of the mounting, the first restraining wall 31 is located around the outer periphery of the group of the projected portions 7A of the first layer. Namely, the first restraining wall 31 being in the projecting state with respect to the outer holding portion 17 is lowered together with the first twisting ring 13 and is positioned on the outer periphery of the group of the projected portions 7A of the first layer.

In this state, the lower end of the first restraining wall 31 abuts against the first stopper 39 in the axial direction. It should be noted that the first restraining wall 31 may be disposed to have an initial gap in the axial direction with respect to the first stopper 39 when the first twisting jig 9A is mounted on the stator 1.

In addition, the first restraining wall 31 may be locked in the retracted state, and may be unlocked to move to the projecting state when the first twisting jig 9A is mounted on the stator 1. This movement may be performed by bias of the first coil spring 37 or by its own weight if the first coil spring 37 is omitted. Since the lock is sufficient as long as it retains not move the first restraining wall 31 to the projecting state, a well-known locking mechanism may be used and release thereof may be performed manually or automatically.

Next, the first twisting ring 13 for the first layer and the second twisting ring 15 for the second layer are driven by the rotation driving mechanism to be rotated reversely to each other in the circumferential direction. At the same time, the lifting mechanism is controlled to lower the first twisting jig 9A to the stator 1. With this, the stator 1 relatively approaches to the first twisting jig 9A in the axial direction as illustrated in FIG. 5(B) and FIG. 7.

This operation causes the coil ends 7a of the projected portions 7A to be displaced relative to the stator core 3 in the axial direction and the circumferential direction. As a result, the projected portions 7A are bent by the twisting process. Namely, the projected portions 7A are bent as in the first and the second layers of FIG. 1.

At this time, the lower end of the first restraining wall 31 receives push-up force from the first stopper 39 according to the approaching operation of the stator 1. With respect to this push-up force, the first coil spring 37 deforms so that the first restraining wall 31 is raised to move to retract with respect to the first twisting ring 13.

The first restraining wall 31 is, therefore, positioned on the outer periphery of the group of the projected portions 7A of the first layer during the twisting process regardless of the approaching operation of the stator 1 in the axial direction with respect to the first twisting jig 9A. Aith this, the group of the projected portions 7A are twisted while the first guide portion 31a restrains the outer periphery of the group of the projected portions 7A on the outermost periphery. This restraining suppresses deformation of the projected portions 7A so as to escape outward in the radial direction.

If the first restraining wall 31 has the initial gap in the axial direction with respect to the first stopper 39 when the first twisting jig 9A is mounted on the stator 1, the first restraining wall may abut against the first stopper 39 in accordance with the advance of the twisting process. The initial gap between the first restraining wall 31 and the first stopper 39 is within a range in which the projected portions 7A is suppressed to deform so as to escape outward in the radial direction until the first restraining wall 31 comes into contact with the first stopper 39.

If the initial gap is large, the projected portions 7A may be deformed so as to escape outward in the radial direction from the gap between the first restraining wall 31 and the first stopper 39 until the first restraining wall 31 comes into contact with the first stopper 39.

The initial gap is, therefore, defined in a state where at least the first restraining wall 31 reaches the bent portions 7Aa (see FIG. 1), preferably between the upper and the lower bent portions 7Aa and 7Ab, more preferably to the lower bent portions 7Ab, or still more preferably is eliminated as in the embodiment.

It should be noted that, in some cases, the group of the projected portions 7A of the second layer may be deformed inward in the radial direction depending on the situation. It is, therefore, also effective to add a separate restraining wall on the inside of the second twisting ring 15 as mentioned above.

Completing the twisting process, the first twisting jig 9A is raised. With this raising, the first and the second twisting rings 13 and 15 of the first twisting jig 9A are pulled out from the bent coil ends 7a of the first and the second layers.

When the first twisting jig 9A is pulled out, the first twisting jig 9A is twisted back in advance. By the twisting-back, the first twisting ring 13 and the second twisting ring 15 are rotated in opposite directions to be slightly returned.

According to the twisting-back, mutually pressing force are eliminated or relaxed between the outer holding portion 17 and the inner projected portions 19 and the coil ends 7a in the circumferential direction. As a result, the first twisting ring 13 and the second twisting ring 15 are effortlessly separated from the coil ends 7a of the projected portions 7A after the twisting.

Completing the twisting process of the projected portions 7A in the first and the second layers in this way, the next twisting jig 9 is positioned on the stator 1 by the jig replacement mechanism. The next twisting jig 9 has inner and outer twisting rings, which are not illustrated, similarly to the first twisting jig 9A. The positioned next twisting jig 9 bends the projected portions 7 A of the third and the fourth layers by the twisting process in the same procedure as the first twisting jig 9A as illustrated in FIG. 1. Also in this twisting jig 9, the restraining wall may be operated on one or both of the inside and the outside in the radial direction.

Completing the twisting process of the projected portions 7A in the third and the fourth layers, the second twisting jig 9B is positioned on the stator 1 by the jig replacement mechanism. The second twisting jig 9B positioned bends the projected portions 7A of the fifth and the sixth layers by the twisting process in the same procedure as the first twisting jig 9A as illustrated in FIG. 1.

In the case of the second twisting jig 9B, the second restraining wall 59 is located on the inside in the radial direction of the group of the projected portions 7A of the sixth layer during the twisting process. The group of the projected portions 7A are, therefore, twisted while restraining the inside of the group of the innermost projected portions 7A by the second restraining wall 59. This restraining suppresses the deformation of the projected portions 7A so as to escape inward in the radial direction according to the bending of the projected portions 7A between the bent portions 7Aa of the deformation of the projected portions 7A.

In addition, the group of the projected portions 7A of the fifth layer may be deformed outward in the radial direction depending on the situation. It is, therefore, also effective to additionally set the fifth restraining wall outside the third twisting ring 41.

After the twist processing, the coil ends 7a are adjacent to and in contact with each other in the radial direction of the stator core 3 between the first and the second layers, between the third and the fourth layers, and between the fifth and the sixth layers.

As mentioned above, the present embodiment supports the first restraining wall 31 (second restraining wall 59) by the first twisting ring 13 (fourth twisting ring 43) so as to be movable in the axial direction. The operation of the twisting processing is, therefore, simply performed to position the first restraining wall 31 (second restraining wall 59) on the outside (or inside) of the projected portions 7A in the radial direction, to suppress the deformation of the projected portions 7A so as to escape outside (or inside) in the radial direction by the first restraining wall 31 (second restraining wall 59) during the twisting processing. As a result, it also suppresses damage such as damage to the insulating layers of the projected portions 7A.

Additionally, in the present embodiment, the first restraining wall 31 (second restraining wall 59) is projected in the axial direction from the outer holding portion 17 (inner holding part 47), to reduce or eliminate the initial gap in the axial direction between the first restraining wall 31 (second restraining wall 59) and the stator core 3 when the twisting processing is performed.

As a result, it more surely suppresses the projected portions 7A to deform so as to escape outward in the radial direction by the first restraining wall 31 (second restricting wall 59) during the twisting process, and also suppresses damage such as damage to the insulating layers of the projected portions 7A.

Even in this way, when the first restraining wall 31 (the second restraining wall 59) comes into contact with the stator core 3 in accordance with the advance of the twisting process, the first restraining wall is pushed into the first twisting ring 13 (fourth twisting ring 43) in the axial direction. It, therefore, avoids a problem such that the twisting process is hindered by interference between the stator core 3 and the first restraining wall 31 (second restraining wall 59).

In the present embodiment, the first restraining wall 31 (second restraining wall 59) abuts against the stator core 3 in the axial direction during the twisting process, and the outer holding portion 17 (inner holding portion 47) moves in the axial direction and the circumferential direction with respect to the first restraining wall 31 (second restraining wall 59) abutting against the stator core 3 in the twisting process.

In the present embodiment, the outer holding portion 17 (inner holding portion 47) is, therefore, moved in the axial direction and the circumferential direction to perform the twisting process in a stable state in which the first restraining wall 31 (second restraining wall 59) abuts against the stator core 3.

The twisting jig 9 of the present embodiment is provided with the first coil spring 37 (second coil spring 65) to bias the first restraining wall 31 (second restraining wall 59) in the axial direction to keep the first restraining wall in the projecting state with respect to the outer holding portion 17 (inner holding portion 47). Accordingly, it suppresses the first restraining wall 31 (second restraining wall 59) to be moved and retracted, to more surely suppress the deformation of the projected portions 7A so as to escape outward in the radial direction.

### DESCRIPTION OF NUMERALS

- 1: STATOR
- 3: STATOR CORE
- 7: SEGMENT COIL
- 7A: PROJECTED PORTION
- 7Aa: BENT PORTION
- 7a: COIL END
- 9A: FIRST TWISTING JIG
- 9B: SECOND TWISTING JIG
- 13: FIRST TWISTING RING (TWISTING MEMBER)
- 15: SECOND TWISTING RING (TWISTING MEMBER)
- 17: OUTER HOLDING PORTION (HOLDING PORTION)
- 19: INNER HOLDING PORTION (HOLDING PORTION)
- 31: FIRST RESTRAINING WALL
- 37: FIRST COIL SPRING (BIASING MEMBER)
- 41: THIRD TWISTING RING (TWISTING MEMBER)
- 43: FOURTH TWISTING RING (TWISTING MEMBER)
- 45: OUTER HOLDING PORTION (HOLDING PORTION)
- 47: INNER HOLDING PORTION (HOLDING PORTION)
- 59: SECOND RESTRAINING WALL
- 65: SECOND COIL SPRING (BIASING MEMBER)

## Claims

1. A twisting jig for a stator in which projected portions with respect to a stator core are bent in a circumferential direction by a twisting process, the projected portions including coil ends of segment coils held by the stator core, comprising:
a twisting member having a holding portion that holds the coil ends to displace the coil ends relative to the stator core in an axial direction and a circumferential direction and bend the projected portions; and
a restraining wall supported so as to be movable in the axial direction on an outside or an inside in a radial direction with respect to the twisting member, to restrain the projected portions on an outside or an inside in the radial direction at the time of the bending in a projecting state of the restraining wall projecting with respect to the holding portion in the axial direction.

2. The twisting jig according to claim 1, wherein
the twisting member has a circumferential shape, and
the restraining wall has a circumferential shape located on the outside or the inside with respect to the twisting member in the radial direction.

3. The twisting jig according to claim 1, wherein
the restraining wall abuts against the stator core in the axial direction during the twisting process, and
the holding portion moves in the axial direction with respect to the restraining wall abutting against the stator core in the twisting process.

4. The twisting jig according to any one of claims 1 to 3, further comprising:
a biasing member to bias the restraining wall in the axial direction to keep the restraining wall in the projecting state with respect to the holding portion.

5. The twisting jig according to any one of claims 1 to 3, wherein
the twisting member is provided with an outer member and an inner member that are positioned outside and inside in the radial direction and rotate in opposite directions to each other to bend the projected portions on an outer side and an inner side in the radial direction oppositely in the circumferential direction, and
the restraining wall is disposed outside the outer member of the twisting member in the radial direction or inside the inner member of the twisting member in the radial direction.

6. A twisting device being provided with the twisting jig according to any one of claims 1 to 3.
